# EUROPEAN PATENT APPLICATION

(11) **EP 4 832 103 A1**
(43) Date of publication of application: **28.10.2026**
(21) Application number: 24908012.8
(22) Date of filing: 17.12.2024
(51) Int. Cl.: H01M 4/525, H01M 4/505, H01M 4/36, H01M 4/131, H01M 10/052, H01M 4/02

(54) **CATHODE ACTIVE MATERIAL FOR LITHIUM SECONDARY BATTERY AND LITHIUM SECONDARY BATTERY COMPRISING SAME**

(30) Priority: 18.12.2023 KR 20230184907
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: SONG, Jun-Hyuk, Seoul 06516 (KR); NAM, Sang Cheol, Seoul 02587 (KR); PARK, Inchul, Incheon 22008 (KR); YU, Byongyong, Incheon 22003 (KR); CHOI, Geunho, Incheon 21525 (KR)
(74) Representative: Pfenning, Meinig & Partner mbB
(86) International application number: PCT/KR2024/020496
(87) International publication number: WO 2025/135729

(57) **Abstract**

The present invention relates to a positive electrode active material for a lithium secondary battery, including a first lithium transition metal oxide and a second lithium transition metal oxide, wherein each of the first lithium transition metal oxide and the second lithium transition metal oxide independently has a molar ratio of lithium to transition metal (Li/Me) of greater than 1, an average particle diameter (D50) of the first lithium transition metal oxide is greater than an average particle diameter (D50) of the second lithium transition metal oxide, the first lithium transition metal oxide and the second lithium transition metal oxide are included at a weight ratio of 60:40 to 80:20 (first lithium transition metal oxide:second lithium transition metal oxide), and each of the first lithium transition metal oxide and the second lithium transition metal oxide independently has a BET specific surface area of 1.0 to 3.5 m²/g.

## Description

### [TECHNICAL FIELD]

The present invention relates to a positive electrode active material for a lithium secondary battery and a lithium secondary battery including the same.

### [BACKGROUND ART]

As the scope of use of lithium secondary batteries expands from small electronic devices to electric vehicles, power storage devices, and the like, demand for positive electrode materials having excellent high energy density and high-output characteristics is increasing.

Accordingly, lithium-rich layered positive electrode active materials have attracted attention as next-generation positive electrode material candidates due to their very high charge/discharge capacity, and active research has recently been conducted.

However, compared with conventional positive electrode materials, lithium-rich layered positive electrode active materials intrinsically have a low true density of the active material itself due to a high lithium content in the structure and a relatively low transition metal ratio, and particle packing is not dense because crystal growth directions vary depending on the composition of the material. As a result, they exhibit low tap density and electrode density, and thus, even though the capacity characteristics of the active material itself are excellent, there has been a problem in that the energy density of an electrode is not significantly improved when actually applied to a battery.

In addition, since lithium-rich layered positive electrode active materials utilize an oxygen oxidation-reduction reaction in addition to transition metals, oxygen in a surface or bulk thereof is likely to be generated as oxygen gas. As a result, the active material particles may easily change into a dense spinel/rock-salt structure having no or little reactivity, and thus there may be a problem in that output characteristics are deteriorated compared with conventional positive electrode materials.

### [DETAILED DESCRIPTION OF THE INVENTION]

### [Technical Problem]

Accordingly, one object of the present invention is to provide a positive electrode active material for a lithium secondary battery, which is a lithium transition metal oxide having a lithium-rich composition and can favorably improve both electrode energy density and battery output characteristics, and a lithium secondary battery including the same.

### [Technical Solution]

One embodiment of the present invention provides a positive electrode active material for a lithium secondary battery, including a first lithium transition metal oxide and a second lithium transition metal oxide, wherein each of the first lithium transition metal oxide and the second lithium transition metal oxide independently has a molar ratio of lithium to transition metal (Li/Me) of greater than 1, an average particle diameter (D50) of the first lithium transition metal oxide is greater than an average particle diameter (D50) of the second lithium transition metal oxide, the first lithium transition metal oxide and the second lithium transition metal oxide are included at a weight ratio of 60:40 to 80:20 (first lithium transition metal oxide:second lithium transition metal oxide), and each of the first lithium transition metal oxide and the second lithium transition metal oxide independently has a BET specific surface area of 1.0 to 3.5 m²/g.

A ratio of the average particle diameter (D50) of the first lithium transition metal oxide to the average particle diameter (D50) of the second lithium transition metal oxide may be 3 to 4.

Each of the first lithium transition metal oxide and the second lithium transition metal oxide may independently have a molar ratio of nickel to transition metal (Ni/Me) of 0.2 to 0.4.

The first lithium transition metal oxide and the second lithium transition metal oxide may be secondary particles formed by aggregation of a plurality of primary particles.

The average particle diameter (D50) of the first lithium transition metal oxide may be 8 to 15 µm.

The average particle diameter (D50) of the second lithium transition metal oxide may be 2 to 5 µm.

A Dmin of the first lithium transition metal oxide may be 1 µm or more.

A Dmax of the first lithium transition metal oxide may be 60 µm or less.

A Dmin of the second lithium transition metal oxide may be 1 µm or more.

A Dmax of the second lithium transition metal oxide may be 30 µm or less.

When the positive electrode active material for a lithium secondary battery is pressed at a pressure of 6 tons, a rate of increase in fine powder having a particle diameter of 1 µm or less may be 4.5% or less.

Each of the first lithium transition metal oxide and the second lithium transition metal oxide may independently be represented by the following Chemical Formula 1.

[Chemical Formula 1] Li₁₊ₐ(NiₓCo_{y}Mn_{z}M_{w})₁₋ₐO₂

In Chemical Formula 1, 0<a≤0.33, 0.2≤x≤0.4, 0≤y≤0.4, 0.3≤z≤0.8, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

Another embodiment of the present invention provides a positive electrode including the above-described positive electrode active material, and a lithium secondary battery including the positive electrode.

### [Advantageous Effects]

The positive electrode active material for a lithium secondary battery according to one embodiment of the present invention includes small-particle-diameter and large-particle-diameter lithium transition metal oxides having lithium-rich compositions in appropriate amounts, thereby excellently implementing both electrode energy density and battery output characteristics, and can improve particle strength to improve lifespan characteristics of a battery.

### [BRIEF DESCRIPTION OF THE DRAWINGS]

FIGS. 1 and 2 are SEM images of a first lithium transition metal oxide of Example 1.
FIGS. 3 and 4 are SEM images of a second lithium transition metal oxide of Example 1.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

One embodiment of the present invention provides a positive electrode active material for a lithium secondary battery, including a first lithium transition metal oxide and a second lithium transition metal oxide, wherein each of the first lithium transition metal oxide and the second lithium transition metal oxide independently has a molar ratio of lithium to transition metal (Li/Me) of greater than 1, an average particle diameter (D50) of the first lithium transition metal oxide is greater than an average particle diameter (D50) of the second lithium transition metal oxide, the first lithium transition metal oxide and the second lithium transition metal oxide are included at a weight ratio of 60:40 to 80:20 (first lithium transition metal oxide:second lithium transition metal oxide), and each of the first lithium transition metal oxide and the second lithium transition metal oxide independently has a BET specific surface area of 1.0 to 3.5 m²/g.

The positive electrode active material for a lithium secondary battery according to one embodiment of the present invention includes a first lithium transition metal oxide and a second lithium transition metal oxide, wherein each of the first lithium transition metal oxide and the second lithium transition metal oxide independently has a molar ratio of lithium to transition metal (Li/Me) of greater than 1, and more specifically may be 1.1, 1.2, or 1.3 or more, and may be 1.6 or 1.5 or less.

That is, the positive electrode active material for a lithium secondary battery according to one embodiment of the present invention contains an excessive amount of lithium compared with a conventional positive electrode material. Accordingly, the positive electrode active material according to one embodiment of the present invention may have an initial charge/discharge capacity remarkably improved to 240 mAh/g or more compared with a conventional positive electrode material. At this time, the molar ratios of lithium to transition metal in the first lithium transition metal oxide and the second lithium transition metal oxide are independently controlled, and may be the same as or different from each other.

However, in a lithium-rich oxide, since crystals generally grow in a flake-like shape as primary particles, tap density and electrode density are low even when secondary particle formation proceeds. Accordingly, even though the positive electrode material itself exhibits highcapacity characteristics, there has been a problem in that actual electrode energy density is not significantly improved.

In addition, since the lithium-rich oxide utilizes an oxygen oxidation-reduction reaction in addition to transition metals, oxygen gas is likely to be generated in a surface or bulk thereof, and accordingly, a spinel/rock-salt structure having little or no reactivity may be formed, thereby causing a problem in that output characteristics are deteriorated compared with a positive electrode material having a conventional composition.

Accordingly, the positive electrode active material for a lithium secondary battery according to one embodiment of the present invention is a bimodal positive electrode active material in which the average particle diameter (D50) of the first lithium transition metal oxide is greater than the average particle diameter (D50) of the second lithium transition metal oxide. Accordingly, tap density and electrode rolling density of the active material may be improved, thereby improving electrode energy density. In addition, particle strength of the active material may be improved, thereby improving structural stability and lifespan characteristics.

At this time, the positive electrode active material for a lithium secondary battery according to one embodiment of the present invention may be a mixture of the first lithium transition metal oxide and the second lithium transition metal oxide.

More specifically, the first lithium transition metal oxide and the second lithium transition metal oxide are included at a weight ratio of 60:40 to 80:20 (first lithium transition metal oxide:second lithium transition metal oxide), and more specifically may be included at a weight ratio of 65:35 to 75:25 (first lithium transition metal oxide:second lithium transition metal oxide). When the weight ratio of the first lithium transition metal oxide and the second lithium transition metal oxide satisfies the above range, a limit rolling density of an electrode can be improved, thereby maximizing electrode energy density, and particle strength can be improved, thereby improving lifespan characteristics of a battery.

In the present specification, the average particle diameter (D50) may be defined as a particle diameter corresponding to 50% of a volume cumulative amount in a particle size distribution curve of particles. The average particle diameter (D50) may be measured, for example, using a laser diffraction method. The laser diffraction method generally makes it possible to measure a particle diameter ranging from a submicron region to several millimeters and to obtain results having high reproducibility and high resolution.

In addition, a ratio of the average particle diameter (D50) of the first lithium transition metal oxide to the average particle diameter (D50) of the second lithium transition metal oxide may be 3 to 4, and more specifically 3.1 to 3.7. When the ratio of the average particle diameter (D50) of the first lithium transition metal oxide to the average particle diameter (D50) of the second lithium transition metal oxide satisfies the above range, the above-mentioned effect of improving battery performance can be more preferably implemented.

The average particle diameter (D50) of the first lithium transition metal oxide may be 8 to 15 µm. In addition, the average particle diameter (D50) of the second lithium transition metal oxide may be 2 to 5 µm. When the average particle diameters of the first lithium transition metal oxide and the second lithium transition metal oxide satisfy the above ranges, the above-mentioned effects of improving electrode energy density and improving particle strength can be more preferably implemented.

The Dmin of the first lithium transition metal oxide may be 1 µm or more, and the Dmax of the first lithium transition metal oxide may be 60 µm or less. When the Dmin and Dmax of the first lithium transition metal oxide satisfy the above ranges, the above-mentioned effect of improving battery performance can be more preferably implemented. More specifically, when the Dmin of the first lithium transition metal oxide is too small, there may be a slurry stability problem, and when the Dmax of the first lithium transition metal oxide is too large, there may be a disconnection problem during manufacture of an electrode.

The Dmin of the second lithium transition metal oxide may be 1 µm or more, and the Dmax of the second lithium transition metal oxide may be 30 µm or less. When the Dmin and Dmax of the second lithium transition metal oxide satisfy the above ranges, the above-mentioned effect of improving battery performance can be more preferably implemented. More specifically, when the Dmin of the second lithium transition metal oxide is too small, there may be a slurry stability problem. In addition, when the Dmax of the second lithium transition metal oxide is too large, there may be a disconnection problem during manufacture of an electrode.

Meanwhile, each of the first lithium transition metal oxide and the second lithium transition metal oxide independently has a BET specific surface area of 1.0 to 3.5 m²/g, and more specifically may have a BET specific surface area of 1.3 to 3.2 m²/g. When the BET specific surface areas of the first lithium transition metal oxide and the second lithium transition metal oxide each satisfy the above range, the above-mentioned effect of improving battery performance can be more preferably implemented. More specifically, when the BET specific surface area of the first lithium transition metal oxide or the second lithium transition metal oxide is too small, there may be a problem in that occurrence of oxygen oxidation/reduction is suppressed, and when the BET specific surface area of the first lithium transition metal oxide or the second lithium transition metal oxide is too large, there may be a problem in that a considerable amount of gas is generated at a high voltage.

In the present specification, the BET specific surface area of the lithium transition metal oxide may be measured using a BET method (Surface area and Porosity analyzer) (Micromeritics, ASAP2020).

Meanwhile, each of the first lithium transition metal oxide and the second lithium transition metal oxide may independently have a molar ratio of nickel to transition metal (Ni/Me) of 0.2 to 0.4, and more specifically 0.3 to 0.4. When the molar ratio of nickel to transition metal satisfies the above range, capacity, initial efficiency, and output characteristics of a battery can be more preferably implemented. More specifically, when the molar ratio of nickel to transition metal is too small, an amount of oxygen oxidation/reduction reaction increases, and thus there may be a problem of decreased lifespan characteristics. When the molar ratio of nickel to transition metal is too large, an amount of oxygen oxidation/reduction reaction decreases, and capacity and output characteristics of a battery may deteriorate. At this time, the molar ratios of nickel to transition metal in the first lithium transition metal oxide and the second lithium transition metal oxide are independently controlled, and may be the same as or different from each other.

In addition, each of the first lithium transition metal oxide and the second lithium transition metal oxide may independently have a molar ratio of manganese to transition metal (Mn/Me) of 0.3 to 0.8, and more specifically 0.4 to 0.7 or 0.4 to 0.6. When the molar ratio of manganese to transition metal is too small, manufacturing costs may increase, active material safety may decrease, and capacity may decrease. When the molar ratio of manganese to transition metal is too large, there may be problems of deterioration of lifespan characteristics and manganese elution due to excessive use of an oxygen oxidation/reduction reaction.

When the positive electrode active material for a lithium secondary battery is pressed at a pressure of 6 tons, a rate of increase in fine powder having a particle diameter of 1 µm or less may be 4.5% or less, and more specifically 4.2% or less. In the present specification, the "rate of increase in fine powder" is a value obtained by converting, into a percentage, an increase amount of a ratio of fine powder in a particle size distribution after pressing relative to a ratio of fine powder in a particle size distribution before pressing at a specific pressure. In the present specification, the "ratio of fine powder in a particle size distribution" may be obtained by measuring a particle size distribution using a laser diffraction method. As the rate of increase in fine powder of the active material satisfies the above range, electrode rolling density can be increased, thereby improving electrode energy density, and particle cracking or the like can be prevented, thereby improving battery lifespan characteristics.

More specifically, each of the first lithium transition metal oxide and the second lithium transition metal oxide may independently be represented by the following Chemical Formula 1.

[Chemical Formula 1] Li₁₊ₐ(NiₓCo_{y}Mn_{z}M_{w})₁₋ₐO₂

In Chemical Formula 1, 0<a≤0.33, 0.2≤x≤0.4, 0≤y≤0.4, 0.3≤z≤0.8, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

In the lithium transition metal oxide of Chemical Formula 1, lithium may be included in an amount corresponding to 1+a, and at this time, a may be 0<a≤0.33. As a is greater than 0 and the lithium content is excessive, capacity characteristics may be improved. However, when a is too large, there may be a problem of deterioration of phase stability.

In the lithium transition metal oxide of Chemical Formula 1, nickel may be included in an amount corresponding to x, that is, 0.2≤x≤0.4. More specifically, when the nickel content is too small, capacity, initial efficiency, and output characteristics may deteriorate. When the nickel content is too large, manufacturing costs may increase, and capacity, initial efficiency, and output characteristics may deteriorate.

In the lithium transition metal oxide of Chemical Formula 1, cobalt may be included in an amount corresponding to y, that is, 0≤y≤0.4. When the cobalt content is too small, it may be difficult to simultaneously achieve sufficient rate characteristics and a high powder density of the active material. When the cobalt content is too large, the cost of raw materials may increase overall and reversible capacity may decrease.

In the lithium transition metal oxide of Chemical Formula 1, manganese may be included in an amount corresponding to z, that is, 0.3≤z≤0.8. When the manganese content is too small, production costs may increase and active material stability may decrease. When the manganese content is too large, there may be problems of deterioration of lifespan characteristics and manganese elution due to excessive use of an oxygen oxidation/reduction reaction.

In the lithium transition metal oxide of Chemical Formula 1, M may be included in an amount corresponding to w, that is, 0≤w≤0.2. At this time, M is a doping element and is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

Meanwhile, the first lithium transition metal oxide and the second lithium transition metal oxide may be secondary particles formed by aggregation of a plurality of primary particles. At this time, the primary particles may include flake-like primary particles.

The positive electrode active material for a lithium secondary battery according to one embodiment of the present invention may be manufactured by manufacturing the first lithium transition metal oxide and the second lithium transition metal oxide according to a conventional method for manufacturing an active material, and then mixing the same at the above-described weight ratio.

For example, each of the first lithium transition metal oxide and the second lithium transition metal oxide may independently be manufactured through preparing a transition metal hydroxide; and forming a mixture including the transition metal hydroxide and a lithium raw material and then calcining the mixture at a temperature of 700 to 900°C to form a lithium transition metal oxide.

In the step of preparing the transition metal hydroxide, the transition metal hydroxide is a positive electrode active material precursor and may be manufactured, for example, by adding a complexing agent-containing solution and a pH adjusting agent-containing solution to a transition metal-containing solution including a nickel raw material and optionally a cobalt raw material or a manganese raw material, thereby performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

In the step of forming the lithium transition metal oxide, the lithium raw material may be a lithium-containing sulfate, nitrate, acetate, carbonate, oxalate, citrate, halide, hydroxide, oxyhydroxide, or the like, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The calcination is performed at a temperature of 800 to 900°C, and more specifically may be performed at a temperature of 830 to 870°C.

The calcination may be performed under an oxygen or air atmosphere. When calcination is performed under the above atmosphere, local oxygen partial pressure may increase, thereby improving crystallinity of the positive electrode active material.

Another embodiment of the present invention provides a positive electrode including the above-described positive electrode active material.

More specifically, the positive electrode according to another embodiment of the present invention may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery including the above-described positive electrode.

More specifically, the lithium secondary battery according to still another embodiment of the present invention may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The positive electrode is the same as described above.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiO_{β} (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitchbased carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

The electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

In addition to the electrolyte components, the electrolyte may further include one or more additives for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Preparation Example 1: Manufacture of First Lithium Transition Metal Oxide (Large Particle Diameter for Examples 1 to 3 and Comparative Examples 1 to 5)

A transition metal solution, a complexing solution, and NaOH were introduced into a coprecipitation reactor, stirred at 50°C, and a reaction time was adjusted to manufacture a first transition metal oxide having an average particle diameter (D50) of 10 µm and a composition of Li₁.₁₃Ni₀.₃Mn₀.₅₇O₂. At this time, the BET specific surface area of the first lithium transition metal oxide was 1.5 m²/g.

### Preparation Example 2: Manufacture of Second Lithium Transition Metal Oxide (Small Particle Diameter for Examples 1 to 3, Comparative Examples 1 to 5, and Reference Examples 3 and 4)

A transition metal solution, a complexing solution, and NaOH were introduced into a coprecipitation reactor, stirred at 50°C, and a reaction time was adjusted to manufacture a second transition metal oxide having an average particle diameter (D50) of 3 µm and a composition of Li₁.₁₃Ni₀.₃Mn₀.₅₇O₂. At this time, the BET specific surface area of the second lithium transition metal oxide was 3 m²/g.

### Preparation Example 3: Manufacture of First Lithium Transition Metal Oxide (Large Particle Diameter for Comparative Example 6)

A transition metal solution, a complexing solution, and NaOH were introduced into a coprecipitation reactor, stirred at 70°C, and a reaction time was adjusted to manufacture a first transition metal oxide having an average particle diameter (D50) of 10 µm and a composition of Li₁.₁₃Ni₀.₃Mn₀.₅₇O₂. At this time, the BET specific surface area of the first lithium transition metal oxide was 0.8 m²/g.

### Preparation Example 4: Manufacture of Second Lithium Transition Metal Oxide (Small Particle Diameter for Comparative Example 6)

A transition metal solution, a complexing solution, and NaOH were introduced into a coprecipitation reactor, stirred at 70°C, and a reaction time was adjusted to manufacture a first transition metal oxide having an average particle diameter (D50) of 3 µm and a composition of Li₁.₁₃Ni₀.₃Mn₀.₅₇O₂. At this time, the BET specific surface area of the second lithium transition metal oxide was 0.9 m²/g.

### Preparation Example 5: Manufacture of First Lithium Transition Metal Oxide (Large Particle Diameter for Comparative Example 7)

A transition metal solution, a complexing solution, and NaOH were introduced into a coprecipitation reactor, stirred at 30°C, and a reaction time was adjusted to manufacture a first transition metal oxide having an average particle diameter (D50) of 10 µm and a composition of Li₁.₁₃Ni₀.₃Mn₀.₅₇O₂. At this time, the BET specific surface area of the first lithium transition metal oxide was 3.7 m²/g.

### Preparation Example 6: Manufacture of Second Lithium Transition Metal Oxide (Small Particle Diameter for Comparative Example 7)

A transition metal solution, a complexing solution, and NaOH were introduced into a coprecipitation reactor, stirred at 30°C, and a reaction time was adjusted to manufacture a second transition metal oxide having an average particle diameter (D50) of 10 µm and a composition of Li₁.₁₃Ni₀.₃Mn₀.₅₇O₂. At this time, the BET specific surface area of the second lithium transition metal oxide was 4.8 m²/g.

### Preparation Example 7: Manufacture of First Lithium Transition Metal Oxide (Large Particle Diameter for Reference Example 1)

A transition metal solution was adjusted so that the Ni/Me ratio was 0.1, a complexing solution and NaOH were introduced into a coprecipitation reactor, stirred at 50°C, and a reaction time was adjusted to manufacture a first transition metal oxide having an average particle diameter (D50) of 10 µm and a composition of Li₁.₁₃Ni₀.₁Mn₀.₇₇O₂. At this time, the BET specific surface area of the first lithium transition metal oxide was 1.8 m²/g.

### Preparation Example 8: Manufacture of Second Lithium Transition Metal Oxide (Small Particle Diameter for Reference Example 1)

A transition metal solution was adjusted so that the Ni/Me ratio was 0.1, a complexing solution and NaOH were introduced into a coprecipitation reactor, stirred at 50°C, and a reaction time was adjusted to manufacture a second transition metal oxide having an average particle diameter (D50) of 3 µm and a composition of Li₁.₁₃Ni₀.₁Mn₀.₇₇O₂. At this time, the BET specific surface area of the second lithium transition metal oxide was 2.9 m²/g.

### Preparation Example 9: Manufacture of First Lithium Transition Metal Oxide (Large Particle Diameter for Reference Example 2)

A transition metal solution was adjusted so that the Ni/Me ratio was 0.5, a complexing solution and NaOH were introduced into a coprecipitation reactor, stirred at 50°C, and a reaction time was adjusted to manufacture a first transition metal oxide having an average particle diameter (D50) of 10 µm and a composition of Li₁.₁₃Ni₀.₄₃Mn₀.₄₄O₂. At this time, the BET specific surface area of the first lithium transition metal oxide was 1.3 m²/g.

### Preparation Example 10: Manufacture of Second Lithium Transition Metal Oxide (Small Particle Diameter for Reference Example 2)

A transition metal solution was adjusted so that the Ni/Me ratio was 0.5, a complexing solution and NaOH were introduced into a coprecipitation reactor, stirred at 50°C, and a reaction time was adjusted to manufacture a second transition metal oxide having an average particle diameter (D50) of 3 µm and a composition of Li₁.₁₃Ni₀.₄₃Mn₀.₄₄O₂. At this time, the BET specific surface area of the second lithium transition metal oxide was 3.2 m²/g.

### Preparation Example 11: Manufacture of First Lithium Transition Metal Oxide (Large Particle Diameter for Reference Example 3)

A transition metal solution, a complexing solution, and NaOH were introduced into a coprecipitation reactor, stirred at 50°C, and a reaction time was adjusted to manufacture a first transition metal oxide having an average particle diameter (D50) of 7.5 µm and a composition of Li₁.₁₃Ni₀.₃Mn₀.₅₇O₂. At this time, the BET specific surface area of the first lithium transition metal oxide was 2.3 m²/g.

### Preparation Example 12: Manufacture of First Lithium Transition Metal Oxide (Large Particle Diameter for Reference Example 4)

A transition metal solution, a complexing solution, and NaOH were introduced into a coprecipitation reactor, stirred at 50°C, and a reaction time was adjusted to manufacture a first transition metal oxide having an average particle diameter (D50) of 13.5 µm and a composition of Li₁.₁₃Ni₀.₃Mn₀.₅₇O₂. At this time, the BET specific surface area of the first lithium transition metal oxide was 1.2 m²/g.

### Examples, Comparative Examples, and Reference Examples

### (1) Manufacture of Positive Electrode Active Material

Using Preparation Examples 1 to 12 as the first lithium transition metal oxide or the second lithium transition metal oxide, positive electrode active materials were manufactured such that the composition, particle diameter, weight ratio, particle diameter ratio, and average porosity of the large-particle-diameter first lithium transition metal oxide and the small-particle-diameter second lithium transition metal oxide were controlled as shown in Table 1 below.

### (2) Manufacture of Lithium Secondary Battery

A slurry for manufacturing an electrode plate was prepared by mixing the manufactured positive electrode active material:conductive material (acetylene black):binder (PVDF, KF1120) at 92.5:3.5:4 wt%, and additional NMP (N-methyl-2-pyrrolidone) was added for solid content and slurry viscosity. The manufactured slurry was coated on Al foil using a doctor blade, dried, and then rolled to manufacture an electrode plate. At this time, the electrode loading amount was 15 to 16 mg/cm², and the mixture density of the electrode was 2.9 g/cm³ or more.

As the electrolyte solution, 1 M LiPF₆ in EC:DMC:EMC = 3:4:3 (vol%) + VC 3.0 wt% was used, and a coin cell was manufactured using a PP separator and a lithium negative electrode (300 µm).

**[Table 1]**

| | First Lithium Transition Metal Oxide Composition | First Lithium Transition Metal Oxide Average Particle Diameter (D50, µm) | First Lithium Transition Metal Oxide BET Specific Surface Area (m²/g) | Second Lithium Transition Metal Oxide Composition | Second Lithium Transition Metal Oxide Average Particle Diameter (D50, µm) | Second Lithium Transitio n Metal Oxide BET Specific Surface Area (m²/g) |
|---|---|---|---|---|---|---|
| Examp le 1 | Li_{1.13}Ni_{0.3}Mn_{0.57}O₂ | 10 | 1.5 | Li_{1.13}Ni_{0.3}Mn_{0.57}O₂ | 3 | 3 |
| Examp le 2 | Li_{1.13}Ni_{0.3}Mn_{0.57}O₂ | 10 | 1.5 | Li_{1.13}Ni_{0.3}Mn_{0.57}O₂ | 3 | 3 |
| Example 3 | Li_{1.13}Ni_{0.3}Mn_{0.57}O₂ | 10 | 1.5 | Li_{1.13}Ni_{0.3}Mn_{0.57}O₂ | 3 | 3 |
| Comparative Example 1 | Li_{1.13}Ni_{0.3}Mn_{0.57}O₂ | 10 | 1.5 | Li_{1.13}Ni_{0.3}Mn_{0.57}O₂ | 3 | 3 |
| Comparative Examp le 2 | Li_{1.13}Ni_{0.3}Mn_{0.57}O₂ | 10 | 1.5 | Li_{1.13}Ni_{0.3}Mn_{0.57}O₂ | 3 | 3 |
| Comparative Example 3 | Li_{1.13}Ni_{0.3}Mn_{0.57}O₂ | 10 | 1.5 | Li_{1.13}Ni_{0.3}Mn_{0.57}O₂ | 3 | 3 |
| Comparative Example 4 | Li_{1.13}Ni_{0.3}Mn_{0.57}O₂ | 10 | 1.5 | Li_{1.13}Ni_{0.3}Mn_{0.57}O₂ | 3 | 3 |
| Comparative Example 5 | Li_{1.13}Ni_{0.3}Mn_{0.57}O₂ | 10 | 1.5 | Li_{1.13}Ni_{0.3}Mn_{0.57}O₂ | 3 | 3 |
| Comparative Example 6 | Li_{1.13}Ni_{0.3}Mn_{0.57}O₂ | 10 | 0.8 | Li_{1.13}Ni_{0.3}Mn_{0.57}O₂ | 3 | 0.9 |
| Comparative Example 7 | Li_{1.13}Ni_{0.3}Mn_{0.57}O₂ | 10 | 3.7 | Li_{1.13}Ni_{0.3}Mn_{0.57}O₂ | 3 | 4.8 |
| Refere nce Examp le 1 | Li_{1.13}Ni_{0.1}Mn_{0.77}O₂ | 10 | 1.8 | Li_{1.13}Ni_{0.1}Mn_{0.77}O₂ | 3 | 2.9 |
| Refere nce Examp le 2 | Li_{1.13}Ni_{0.43}Mn_{0.44}O₂ | 10 | 1.3 | Li_{1.13}Ni_{0.43}Mn_{0.44}O₂ | 3 | 3.2 |
| Refere nce Examp le 3 | Li_{1.13}Ni_{0.3}Mn_{0.57}O₂ | 7.5 | 2.3 | Li_{1.13}Ni_{0.3}Mn_{0.57}O₂ | 3 | 3 |
| Reference Example 4 | Li_{1.13}Ni_{0.3}Mn_{0.57}O₂ | 13.5 | 1.2 | Li_{1.13}Ni_{0.3}Mn_{0.57}O₂ | 3 | 3 |

**[Table 2]**

| | Large Particle Diameter:Small Particle Diameter Weight Ratio | Particle Diameter Ratio of Large Particle Diameter to Small Particle Diameter | Ni/Me Ratio |
|---|---|---|---|
| Example 1 | 80:20 | 3.33 | 0.35 |
| Example 2 | 70:30 | 3.33 | 0.35 |
| Example 3 | 60:40 | 3.33 | 0.35 |
| Comparative Example 1 | 100:0 | 3.33 | 0.35 |
| Comparative Example 2 | 85:15 | 3.33 | 0.35 |
| Comparative Example 3 | 50:50 | 3.33 | 0.35 |
| Comparative Example 4 | 25:75 | 3.33 | 0.35 |
| Comparative Example 5 | 0:100 | 3.33 | 0.35 |
| Comparative Example 6 | 70:30 | 3.33 | 0.35 |
| Comparative Example 7 | 70:30 | 3.33 | 0.35 |
| Reference Example 1 | 70:30 | 3.33 | 0.1 |
| Reference Example 2 | 70:30 | 3.33 | 0.5 |
| Reference Example 3 | 70:30 | 2.5 | 0.35 |
| Reference Example 4 | 70:30 | 4.5 | 0.35 |

### Experimental Example 1: SEM Images of Lithium Transition Metal Oxides

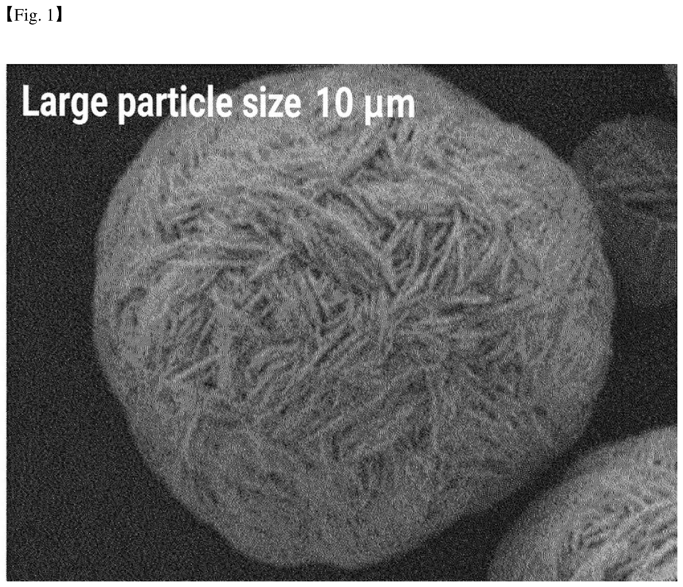

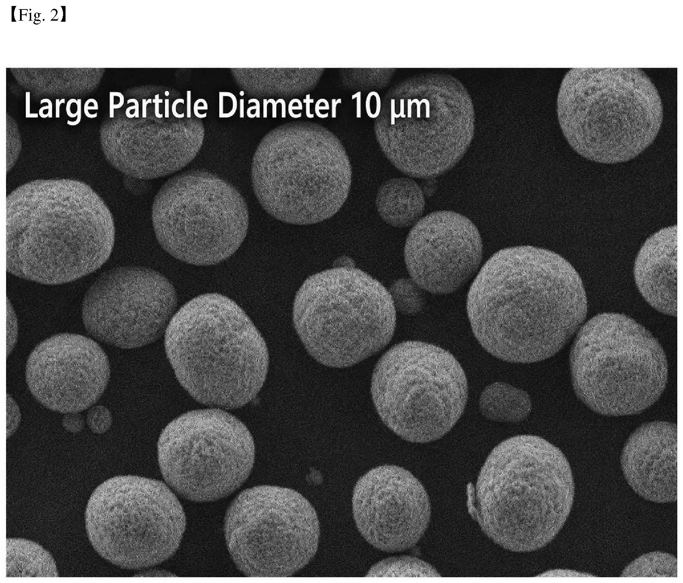

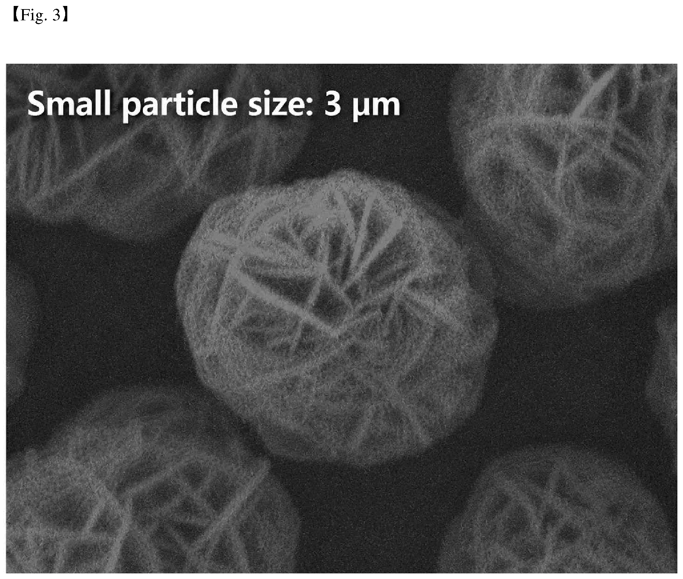

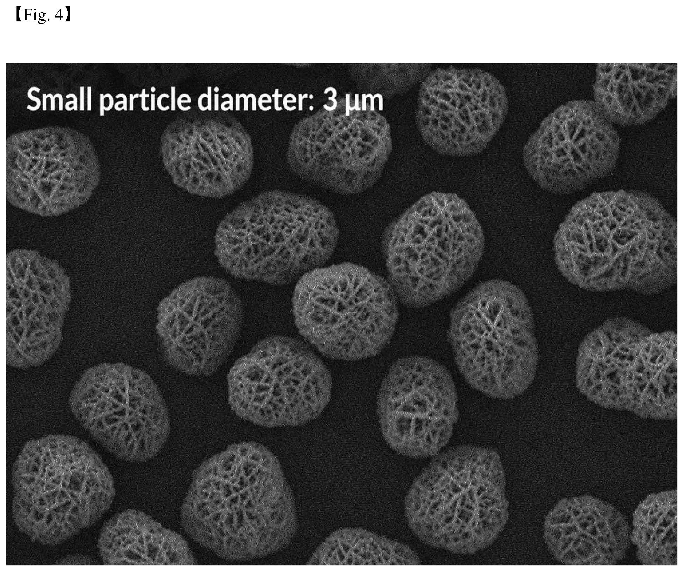

SEM (scanning electron microscope) images of the first lithium transition metal oxide and the second lithium transition metal oxide of Example 1 were observed and are shown in FIGS. 1 to 2 (first lithium transition metal oxide) and FIGS. 3 to 4 (second lithium transition metal oxide).

Referring to FIGS. 1 to 4, it was confirmed that the first and second lithium transition metal oxides of Example 1 were secondary particles formed by aggregation of a plurality of primary particles, the primary particles had a flake shape, and the secondary particles had a spherical shape.

### Experimental Example 2: Evaluation of Physical Properties of Positive Electrode Active Material

Physical properties of the positive electrode active materials manufactured according to Examples 1 to 3, Comparative Example 1, Comparative Example 5, Reference Example 1, and Reference Example 2 were evaluated, and the results are shown in Table 3 below. Specific experimental methods are as follows.

### (1) Evaluation of Average Particle Diameter (D50)

With respect to active material powder, a particle diameter corresponding to 50% of a volume cumulative amount was measured using a laser diffraction method.

### (2) Evaluation of Rate of Increase in Fine Powder (Pressed at 6 tons)

After pressure was applied to 3 g of each active material contained in a mold using a hydraulic press, a rate of increase in fine powder having a particle diameter of 1 µm or less was evaluated.

**[Table 3]**

| | Average Particle Diameter (D50, µm) | Rate of Increase in Fine Powder (%) |
|---|---|---|
| Example 1 | 7.97 | 4.1 |
| Example 2 | 7.82 | 4 |
| Example 3 | 7.76 | 4 |
| Comparative Example 1 | 9.65 | 5 |
| Comparative Example 5 | 3.45 | 4.8 |
| Reference Example 1 | 7.84 | 4.7 |
| Reference Example 2 | 8.19 | 5.6 |

Referring to Table 3, it was confirmed that, in the Examples in which the weight ratio, BET specific surface area, nickel content, and the like of the first lithium transition metal oxide and the second lithium transition metal oxide were appropriately controlled, the rate-of-increase-in-fine-powder characteristics were very favorable.

In contrast, in Comparative Examples and Reference Examples in which the weight ratio or nickel content of the first lithium transition metal oxide and the second lithium transition metal oxide was outside an appropriate range, it was confirmed that the rate-of-increase-in-fine-powder characteristics were significantly deteriorated compared with the Examples.

### Experimental Example 3: Evaluation of Electrochemical Characteristics of Battery

Electrochemical characteristics of the lithium secondary batteries manufactured according to Examples, Comparative Examples, and Reference Examples were evaluated, and the results are shown in Table 4 below. Specific experimental methods are as follows.

### (1) Evaluation of Initial Discharge Capacity and Initial Efficiency

After lithium secondary battery half cells were manufactured and aged at 25°C for 24 hours, a charge/discharge test was performed. For initial capacity evaluation, 200 mAh/g was used as a reference capacity, and charging was performed at 45°C to 4.65 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of Limit Rolling Density

After the maximum line pressure that a rolling mill can apply was set, repeated rolling was performed 3 to 5 times, and a limit rolling density at which the thickness was no longer reduced was evaluated.

### (3) Evaluation of Electrode Energy Density

The energy density of a secondary battery was evaluated based on a secondary battery design using a graphite negative electrode as a counter electrode.

### (4) Evaluation of High-Output Characteristics (0.33C/0.1C)

High-output characteristics were evaluated by dividing an initial discharge capacity at 0.33C by an initial discharge capacity at 0.1C and converting the result into a percentage (%).

### (5) Evaluation of Overall Performance Index (Corresponding to Figure of Merit in the Detailed Description)

With weights of the square of energy density and output characteristics being set to 1:1, the overall performance index of Example 2 was set to 100, and relative values of other Examples and Comparative Examples were derived.

**[Table 4]**

| | Discharge Capacity (mAh/g) | Initial Efficiency (%) | Limit Rolling Density (g/cc) | Electrode Energy Density (Wh/L) | Output Characteristics (%) | Overall Performance Index |
|---|---|---|---|---|---|---|
| Example 1 | 266.2 | 91.3 | 3.03 | 622.7 | 93.10 | 99.8 |
| Example 2 | 268.5 | 91.5 | 3.04 | 622.9 | 93.22 | 100 |
| Example 3 | 267.5 | 91.4 | 3.02 | 621.2 | 92.95 | 99.4 |
| Comparative Example 1 | 265.2 | 91.1 | 2.91 | 610 | 92.96 | 97.7 |
| Comparative Example 2 | 266.2 | 91.5 | 2.97 | 616.5 | 92.92 | 98.6 |
| Comparative Example 3 | 269.6 | 91.7 | 2.96 | 614.8 | 92.96 | 98.4 |
| Comparative Example 4 | 274.5 | 91.9 | 2.85 | 604.3 | 93.28 | 97.1 |
| Comparative Example 5 | 279.7 | 91.9 | 2.65 | 583.1 | 94.32 | 94.7 |
| Comparative Example 6 | 262.4 | 93.7 | 3.05 | 608.3 | 89.4 | 96.2 |
| Comparative Example 7 | 277.4 | 89.9 | 2.77 | 598.3 | 95.3 | 96.1 |
| Reference Example 1 | 254.5 | 86.7 | 3.01 | 574.3 | 90.86 | 89.9 |
| Reference Example 2 | 251.2 | 88.4 | 3.01 | 581.2 | 91.12 | 91.2 |
| Reference Example 3 | 278.6 | 91.3 | 2.81 | 596.6 | 93.3 | 95.3 |
| Reference Example 4 | 264.3 | 93.0 | 2.86 | 588.3 | 86.6 | 92.3 |

Referring to Table 4, it was confirmed that, in the Examples in which the weight ratio and BET specific surface area of the first lithium transition metal oxide and the second lithium transition metal oxide, the particle diameter ratio of the first lithium metal oxide and the second lithium metal oxide, the nickel content, and the like were appropriately controlled within the ranges according to the present invention, discharge capacity, initial efficiency, limit rolling density, battery energy density, output characteristics, and overall performance index were all generally very favorable.

In contrast, in Comparative Examples 1 to 5 in which the weight ratio of the first lithium transition metal oxide and the second lithium transition metal oxide was outside an appropriate range, the initial discharge capacity or initial efficiency of the positive electrode material itself was similar to that of the Examples, but it was confirmed that the limit rolling density decreased, and thus the battery energy density deteriorated.

In addition, in Comparative Examples 6 and 7 in which the BET specific surface areas of the first and second lithium transition metal oxides were too small or too large, it was confirmed that the output characteristics were significantly deteriorated or the energy density was low.

In addition, in Reference Examples 1 and 2 in which the nickel content was too small or too large, it was confirmed that the limit rolling density was almost close to that of the Examples, but the discharge capacity and initial efficiency were significantly deteriorated, and accordingly, the electrode energy density was deteriorated. In addition, it was confirmed that the output characteristics were deteriorated.

In addition, in Reference Examples 3 and 4 in which the particle diameter ratio of the large particle diameter to the small particle diameter was too small or too large, it was confirmed that the energy density and output characteristics were deteriorated.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
a first lithium transition metal oxide; and
a second lithium transition metal oxide,
wherein each of the first lithium transition metal oxide and the second lithium transition metal oxide independently has a molar ratio of lithium to transition metal (Li/Me) of greater than 1,
wherein an average particle diameter (D50) of the first lithium transition metal oxide is greater than an average particle diameter (D50) of the second lithium transition metal oxide,
wherein the first lithium transition metal oxide and the second lithium transition metal oxide are included at a weight ratio of 60:40 to 80:20 (first lithium transition metal oxide:second lithium transition metal oxide), and
wherein each of the first lithium transition metal oxide and the second lithium transition metal oxide independently has a BET specific surface area of 1.0 to 3.5 m²/g.

2. The positive electrode active material for a lithium secondary battery of claim 1,
wherein a ratio of the average particle diameter (D50) of the first lithium transition metal oxide to the average particle diameter (D50) of the second lithium transition metal oxide is 3 to 4.

3. The positive electrode active material for a lithium secondary battery of claim 1,
wherein each of the first lithium transition metal oxide and the second lithium transition metal oxide independently has a molar ratio of nickel to transition metal (Ni/Me) of 0.2 to 0.4.

4. The positive electrode active material for a lithium secondary battery of claim 1,
wherein the first lithium transition metal oxide and the second lithium transition metal oxide are secondary particles formed by aggregation of a plurality of primary particles.

5. The positive electrode active material for a lithium secondary battery of claim 1,
wherein the average particle diameter (D50) of the first lithium transition metal oxide is 8 to 15 µm.

6. The positive electrode active material for a lithium secondary battery of claim 1,
wherein the average particle diameter (D50) of the second lithium transition metal oxide is 2 to 5 µm.

7. The positive electrode active material for a lithium secondary battery of claim 1,
wherein a Dmin of the first lithium transition metal oxide is 1 µm or more.

8. The positive electrode active material for a lithium secondary battery of claim 1,
wherein a Dmax of the first lithium transition metal oxide is 60 µm or less.

9. The positive electrode active material for a lithium secondary battery of claim 1,
wherein a Dmin of the second lithium transition metal oxide is 1 µm or more.

10. The positive electrode active material for a lithium secondary battery of claim 1,
wherein a Dmax of the second lithium transition metal oxide is 30 µm or less.

11. The positive electrode active material for a lithium secondary battery of claim 1,
wherein, when pressed at a pressure of 6 tons, a rate of increase in fine powder having a particle diameter of 1 µm or less is 4.5% or less.

12. The positive electrode active material for a lithium secondary battery of claim 1,
wherein each of the first lithium transition metal oxide and the second lithium transition metal oxide is independently represented by the following Chemical Formula 1:
[Chemical Formula 1] Li₁₊ₐ(NiₓCo_{y}Mn_{z}M_{w})₁₋ₐO₂
wherein, in Chemical Formula 1, 0<a≤0.33, 0.2≤x≤0.4, 0≤y≤0.4, 0.3≤z≤0.8, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

13. A positive electrode comprising the positive electrode active material of any one of claims 1 to 12.

14. A lithium secondary battery comprising the positive electrode of claim 13.
